# EUROPEAN PATENT SPECIFICATION

(11) **EP 1 155 365 B1**
(45) Date of publication and mention of the grant of the patent: **06.05.2004**
(21) Application number: 00904409.0
(22) Date of filing: 20.01.2000
(51) Int. Cl.: G06F 9/46, G06F 1/00, G07F 7/10

(54) **TECHNIQUES FOR IMPLEMENTING SECURITY ON A SMALL FOOTPRINT DEVICE USING A CONTEXT BARRIER**
VERFAHREN ZUR DURCHFÜHRUNG VON SICHERHEITVORGABEN IN EINEM KLEINGERÄT UNTER VERWENDUNG VON EINER KONTEXTSPERRE
TECHNIQUES PERMETTANT D'ASSURER LA SECURITE D'UN DISPOSITIF A FAIBLE EMPREINTE PAR UTILISATION D'UNE BARRIERE DE CONTEXTE

(30) Priority: 22.01.1999 US 235158
(43) Date of publication of application: 21.11.2001
(60) Divisional application: 04005586.5
(73) Proprietor: SUN MICROSYSTEMS, INC., Palo Alto, California 94303 (US)
(72) Inventor: SUSSER, Joshua, San Francisco, CA 94114 (US); BUTLER, Mitchel, B., Sunnyvale, CA 94087 (US); STREICH, Andy, Foster City, CA 94404 (US); de JONG, Eduard, Redland Bristol BS6 6QD (GB)
(74) Representative: Davies, Simon Robert
(86) International application number: PCT/US2000/001233
(87) International publication number: WO 2000/043875

(56) References cited:
- WO-A-98/19237
- US-A- 5 204 897
- US-A- 5 452 431
- SUN MICROSYSTEMS, INC.: "Java Card Runtime Environment (JCRE) 2.1 Specification - Draft 2" 14 December 1998 (1998-12-14) , PALO ALTO, US XP002138793 cited in the application page 6-2 -page 6-10
- GONG L ET AL: "Going beyond the sandbox: an overview of the new security architecture in the JavaDevelopment Kit 1.2" PROCEEDINGS OF THE USENIX SYMPOSIUM ON INTERNET TECHNOLOGIES AND SYSTEMS, 8 December 1997 (1997-12-08), XP002100907
- N. ISLAM ET AL: "A Flexible Security Model for Using Internet Content" IBM THOMAS J.WATSON RESEARCH CENTER PAPERS, [Online] 28 June 1997 (1997-06-28), XP002138803 Retrieved from the Internet: <URL:http://www.ibm.com/java/education/fle xsecurity/> [retrieved on 2000-05-25]

## Description

### BACKGROUND OF THE INVENTION

### Field of the Invention

The invention relates to computer security and more particularly to techniques for implementing a security on small footprint devices, such as smart cards.

### Description of Related Art

A number of object oriented programming languages are well known in the art. Examples of these include the C++ language and the Smalltalk language.

Another such object oriented language is the JAVA™ language. This language is described in the book Java™ Language Specification, by James Gosling et al. and published by Addison-Wesley. The JAVA™ language is particularly well suited to run on a Java™ Virtual Machine. Such a machine is described in the book Java™ Virtual Machine Specification, by Tim Lindholm and Frank Yellin which is also published by Addison-Wesley.

A number of small footprint devices are also well known in the art. These include smart cards, cellular telephones, and various other small or miniature devices.

Smart cards are similar in size and shape to a credit card but contain, typically, data processing capabilities within the card (e.g. a processor or logic performing processing functions) and a set of contacts through which programs, data and other communications with the smart card may be achieved. Typically, the set of contacts includes a power source connection and a return as well as a clock input, a reset input and a data port through which data communications can be achieved.

Information can be written to a smart card and retrieved from a smart card using a card acceptance device. A card acceptance device is typically a peripheral attached to a host computer and contains a card port, such as a slot, in to which a smart card can be inserted. Once inserted, contacts or brushes from a connector press against the surface connection area on the smart card to provide power and to permit communications with the processor and memory typically found on a smart card.

Smart cards and card acceptance devices (CADs) are the subject of extensive standardization efforts, e.g. ISO 7816. Reference is made to WO 9819237 A.

The use of firewalls to separate authorized from unauthorized users is well known in the network environment. For example, such a firewall is disclosed in U.S. Patent Application US-2002169980 A, filed December 1, 1998 and entitled "AUTHENTICATED FIREWALL TUNNELLING FRAMEWORK" in the name of inventor David Brownell.

A subset of the full Java™ platform capabilities has been defined for small footprint devices, such as smart cards. This subset is called the Java Card™ platform. The uses of the Java Card™ platform are described in the following publications.
JAVA CARD™ 2.0 -- LANGUAGE SUBSET AND VIRTUAL MACHINE SPECIFICATION;
JAVA CARD™ 2.1 -- APPLICATION PROGRAMMING INTERFACES;
JAVA CARD™ 2.0 -- PROGRAMMING CONCEPTS;
JAVA CARD™ APPLET DEVELOPER'S GUIDE.

A working draft of ISO 7816 -- Part 11 has been circulated for comment. That draft specifies standards for permitting separate execution contexts to operate on a smart card. Parts of that working draft are hereby incorporated.

The notion of an execution context is well known in computer science. Generally speaking, the use of multiple execution contexts in a computing environment provides a way to separate or isolate different program modules or processes from one another, so that each can operate without undue interference from the others. Interactions --if any-- between different contexts are deliberate rather than accidental, and are carefully controlled so as to preserve the integrity of each context. An example of multiple contexts is seen in larger hardware devices, such as mainframes, where a plurality of virtual machines may be defined, each such virtual machine having its own execution context. Another example is seen in U.S. Patent No. 5,802,519 in the name of inventor De Jong, which describes the use of multiple execution contexts on a smart card. It will be appreciated by those of skill in the art that a computing environment which provides multiple execution contexts also needs to provide a mechanism for associating any given executing code with its corresponding context.

Also well known is the notion of a current context. Certain computing environments that support multiple contexts will, at any given time, treat one context in particular as an active focus of computation. The context can be referred to as the "current context." When the current context changes, so that some other context becomes the current context, a "context switch" is said to occur. As will be appreciated by those of skill in the art, these computing environments provide mechanisms for keeping track of which context is the current one and for facilitating context switching.

In the prior art, in the world of small footprint devices, and particularly in the world of smart cards, there was no inter-operation between contexts operating on the small footprint devices. Each context operated totally separately and could operate or malfunction within its context space without affecting other applications or processes in a different context.

One layer of security protection utilized by the Java™ platform is commonly referred to as a sandbox model. Untrusted code is placed into a "sandbox" where it can "play" safely without doing any damage to the "real world" or full Java™ environment. In such an environment, Java™ applets don't communicate, but each has its own name space.

Some smart card operating systems don't permit execution contexts to communicate directly, but do permit communications through an operating system, or through a server.

### The Problems

A number of problems exist when trying to place computer programs and other information on a small footprint device. One of the compelling problems is the existence of very limited memory space. This requires often extraordinary efforts to provide needed functionality within the memory space.

A second problem associated with small footprint devices is the fact that different small footprint device manufacturers can utilize different operating systems. As a result, applications developed for one operating system are not necessarily portable to small footprint devices manufactured by a different manufacturer.

If programs from more than one source of programs (manufacturer or vendor) are to be applied to a single small footprint device, security becomes a factor as one attempts to avoid corruption of existing programs and data when a new program is loaded on to the small footprint device. The same concern exists when one wishes to prevent a hacker or a malicious person from accessing programs and data.

It is clear that small footprint devices such as smart cards don't have the resources necessary to implement separate virtual machines. Nevertheless, it is desirable to maintain strict security between separate execution contexts.

In the past, security was provided by loading only applications from the same source or from a known trusted source onto a smart card or other small footprint device.

Accordingly, it would be desirable to allow object-oriented interaction between selected execution contexts only in safe ways via fast efficient peer to peer communications which do not impose undue burdens on the programmer but facilitate dynamic loading of applets written at different times by untrusted sources.

### SUMMARY OF THE INVENTION

The invention is directed to providing a context barrier (sometimes referred to as a firewall) for providing separation and isolation of one context from another and to provide controlled access across the barrier when that is needed.

In accordance with the invention, two execution contexts, e.g. each containing one or more applets, running in the same logical (i.e., virtual or real) machine, protected from each other, can share information in a controlled, secure way, using language mechanisms, such as object-oriented language mechanisms. Security can be, for example, object by object. Thus, a method in a first execution context can access a first object A in a second execution context, but not a second object B in the second execution context on a selective basis.

In accordance with one exemplary embodiment, an enhanced Java™ Virtual Machine (VM) provides certain run-time checks of attempted access across execution contexts in the VM. Checks can be automatic by the VM or coded by the programmer with support from the VM. This can be done using language-level communication mechanisms. In this way, one can express object access across execution contexts in the same way as other object accesses using the language are made. These run-time checks provide a second dimension of defense/security beyond that which the Java™ language and platform already provide.

These mechanisms provide protection against, e.g., security holes due to programming bugs (such as declaring a datum "public" (global) when it shouldn't be accessible to all contexts). They also allow fine-grain control of sharing (such as selection of objects to share and applets to share to).

The invention is also directed to computer program products and carrier waves related to the other aspects of the invention.

The foregoing and other features, aspects and advantages of the present invention will become more apparent from the following detailed description of the present invention when taken in conjunction with the accompanying drawings.

### BRIEF DESCRIPTION OF THE DRAWINGS

The features and advantages of the present invention will be apparent from the following description in which:
**Figure 1** is an illustration of a computer equipped with a card acceptance device and of a smart card for use with the card acceptance device.
**Figure 2** is an illustration of a computer equipped with a card acceptance device connected to a network.
**Figure 3** is an exemplary hardware architecture of a small footprint device, such as a smart card, of the prior art.
**Figure 4** illustrates objects being accessed by principals as done in the prior art.
**Figure 5** is an exemplary security model which can be used in explaining the various embodiments of the invention.
**Figure 6** is a block diagram showing separation of execution contexts by a firewall or context barrier in accordance with one aspect of the invention.
**Figure 7** is a representation of a software architecture useful in carrying out the invention.
**Figure 8** is a flow chart of a security enforcement process implementing a firewall in accordance with one aspect of the invention.
**Figure 9** is a block diagram showing object access across a firewall in accordance with one aspect of the invention.
**Figure 10** is a block diagram showing cascaded object access across a firewall.
**Figure 11** is a flow chart of a process for permitting access by a principal in one context across a firewall into another context.
**Figure 12** is a block diagram illustrating the use of an entry point object to permit access across a firewall.
**Figure 13** is a block diagram illustrating the use of a global data structure such as an array for access across a firewall.
**Figure 14** is a block diagram illustrating the use of a supercontext to permit access across a firewall.
**Figure 15** is a block diagram illustrating the use of shareable interface objects to permit access across a firewall.
**Figure 16** is a flow chart of a security enforcement process permitting access across a firewall.
**Figure 17** is the flow chart of **Figure 16** showing details of block **1620.**
**Figure 18** is a flow chart showing an exemplary implementation of block **1629** of **Figure 17.**

### NOTATIONS AND NOMENCLATURE

The detailed descriptions which follow may be presented in terms of program procedures executed on a computer or network of computers. These procedural descriptions and representations are the means used by those skilled in the art to most effectively convey the substance of their work to others skilled in the art.

A procedure is here, and generally, conceived to be a self-consistent sequence of steps leading to a desired result. These steps are those requiring physical manipulations of physical quantities. Usually, though not necessarily, these quantities take the form of electrical or magnetic signals capable of being stored, transferred, combined, compared, and otherwise manipulated. It proves convenient at times, principally for reasons of common usage, to refer to these signals as bits, values, elements, symbols, characters, terms, numbers, or the like. It should be noted, however, that all of these and similar terms are to be associated with the appropriate physical quantities and are merely convenient labels applied to these quantities.

Further, the manipulations performed are often referred to in terms, such as adding or comparing, which are commonly associated with mental operations performed by a human operator. No such capability of a human operator is necessary, or desirable in most cases, in any of the operations described herein which form part of the present invention; the operations are machine operations. Useful machines for performing the operation of the present invention include general purpose digital computers or other computational devices.

The present invention also relates to apparatus for performing these operations. This apparatus may be specially constructed for the required purpose or it may comprise a general purpose computer as selectively activated or reconfigured by a computer program stored in the computer. The procedures presented herein are not inherently related to a particular computer or other apparatus. Various general purpose machines may be used with programs written in accordance with the teachings herein, or it may prove more convenient to construct more specialized apparatus to perform the required method steps. The required structure for a variety of these machines will appear from the description given.

### DETAILED DESCRIPTION

Attached as an Appendix to this specification is chapter 6 of a document entitled JAVA CARD RUNTIME ENVIRONMENT 2.1 SPECIFICATION. This draft document, which provides further detailed description of specific embodiments of the invention, is incorporated in its entirety as an integral part of the present specification. Further details can be taken from the published application.

Although the inventive techniques are described hereinafter in the context of a smart card example, the example is merely illustrative and shouldn't limit the scope of the invention.

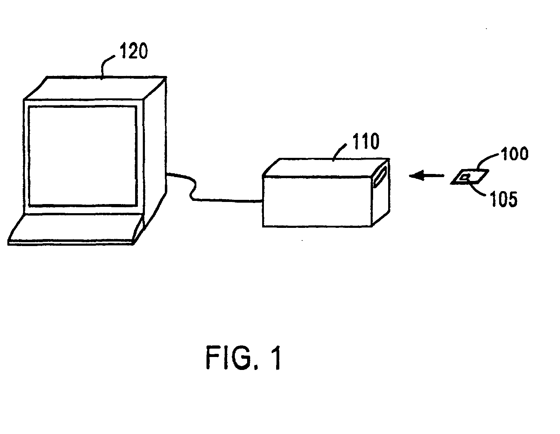

**Figure 1** is an illustration of a computer **120** equipped with a card acceptance device **110** and a smart card **100** for use with the card acceptance device **110.** In operation, the smart card **100** is inserted into card acceptance device **110** and power and data connections applied through a set of contacts **105** accessible at the surface of the smart card **100.** When the card is inserted, mating contacts from the card acceptance device **110** interconnect with the surface contacts 105 to power-up the card and permit communications with the onboard processor and memory storage.

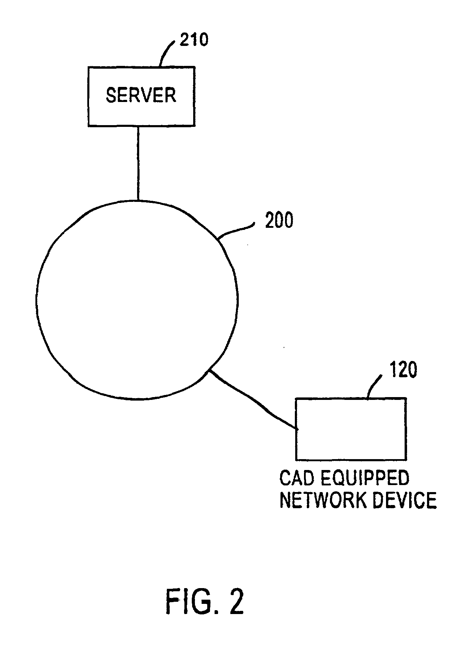

**Figure 2** is an illustration of a computer equipped with a card acceptance device, such as **120** in **Figure 1,** connected to a network **200.** Also connected to a network are a plurality of other computing devices, such as server **210.** It is possible to load data and software onto a smart card over the network **200** using card equipped device **120.** Downloads of this nature can include applets or other programs to be loaded onto a smart card as well as digital cash and other information used in accordance with a variety of electronic commerce and other applications. The instructions and data used to control processing elements of the card acceptance device and of the smart card may be stored in volatile or non-volatile memory or may be received directly over a communications link, e.g., as a carrier wave containing the instructions and/or data. Further, for example, the network can be a LAN or a WAN such as the Internet or other network.

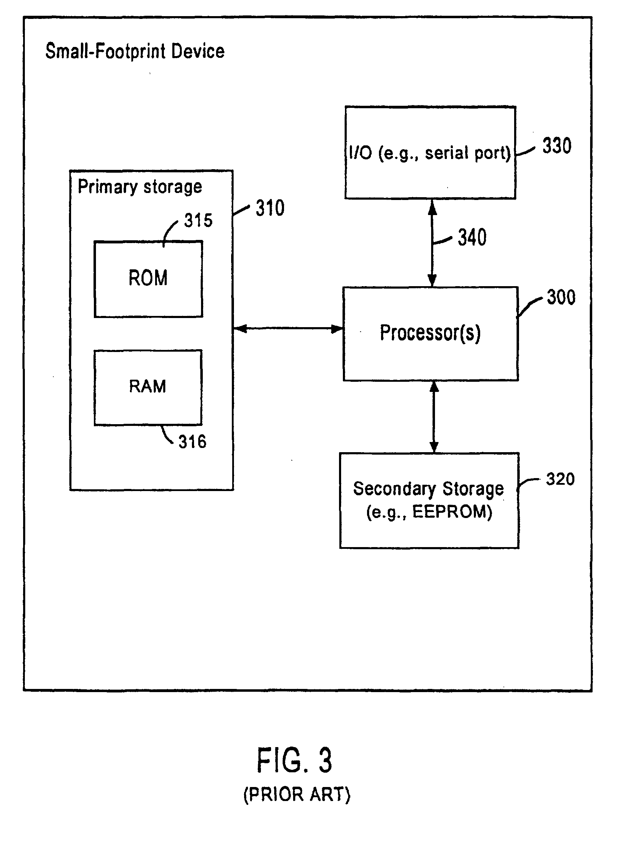

**Figure 3** is an exemplary hardware architecture of a small footprint device, such as a smart card, of the prior art. As shown in **Figure 3**, a processor **300** interconnects with primary storage **310** which may include read only memory **315** and/or random access memory **316.** The processor also connects with a secondary storage **320** such as EEPROM and with an input/output **330**, such as a serial port. One can see the small footprint devices of this nature can be very simple.

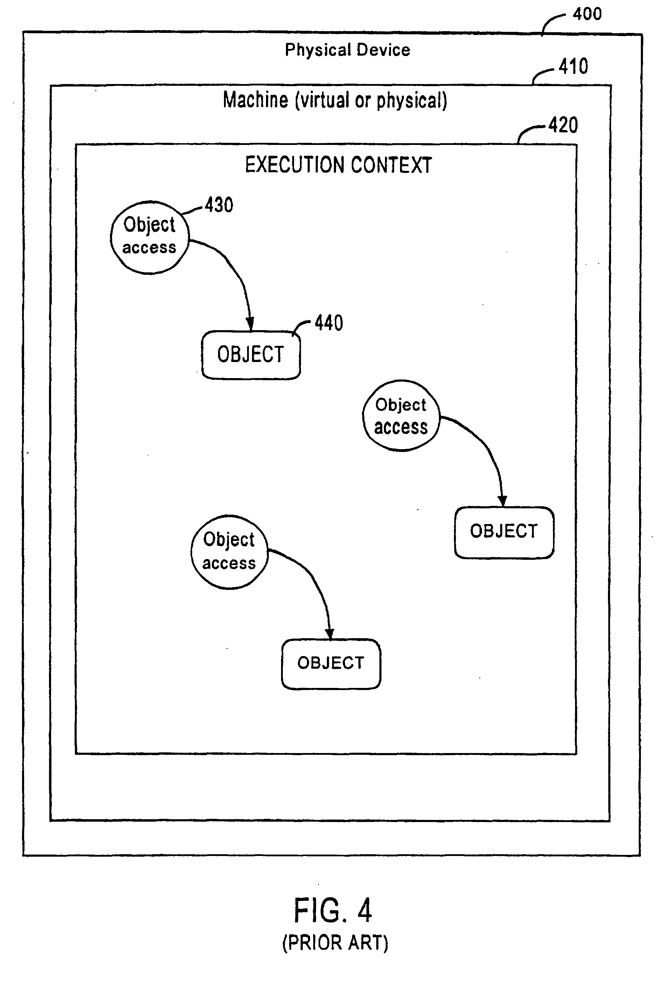

**Figure 4** illustrates objects being accessed by principals as done in the prior art. As shown in **Figure 4,** physical device **400**, such as the small footprint device may have contained within it one or more processing machines (virtual or physical) which are running an execution context **420.** The execution context may be, for example, a context associated with a particular applet. One or more principals **430** (e.g., applets or applications) in the execution context may seek to access other objects within the execution context. As long as the access occurs within the execution context, the accesses will be permitted and everything will function normally.

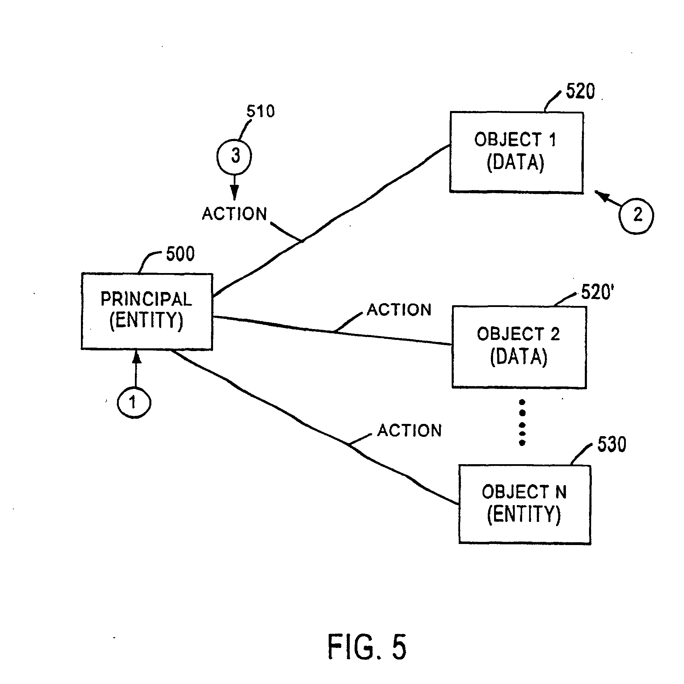

**Figure 5** is an exemplary security model which can be used in explaining the various embodiments of the invention. It is just one of many models which might be utilized but is a convenient model for this purpose. In this model, a principal (sometimes called entity) **500** proposes to take an action **510** on an object, such as object **520.** Security checks may be imposed on the principal, on the object, and/or on the action proposed to be taken.

In **Figure 5**, two types of objects are shown on which action may be taken by a principal. These include data objects, (e.g. data1 and data2 (**520, 520'**)) and entity **530.** A principal may operate or attempt to operate on any of these objects.

While data is passive, an entity **530** is active. The diagram line from Principal to an active entity is also labeled "action," but this could be a more sophisticated and arbitrarily complex action, such as making a function or method call or sending a message as compared with action on a data object. As with data, a security check enforced by the operating system may use the identity of the principal, the identity of the entity, and/or the type of action. Furthermore, the entity, being active, can perform its own additional security checks. These can be as arbitrarily complex as one desires, and can make use of the identity of the Principal, the identity of the entity itself, the action, and/or any other information that is available.

In an object-oriented system (such as the Java Card™ platform) "objects" are typically a combination of data and entity. When a Principal tries to access a field of an object, this is a data access--a fairly simple action protected by a fairly simple security check. When a Principal tries to access a method of an object, this is an entity access, which can be arbitrarily complex both in action and in security check.

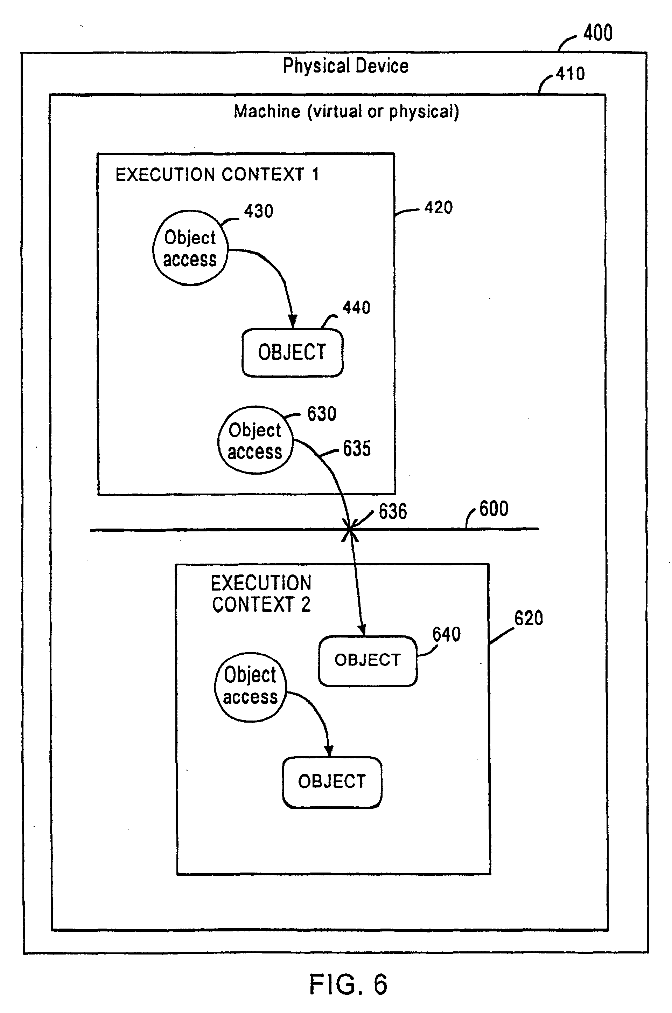

**Figure 6** is a block diagram showing separation of execution contexts by a firewall or context barrier in accordance with one aspect of the invention. The physical device **400** and the machine **410** correspond to the same items shown in **Figure 4.** An execution context **420** shows one principal **430** attempting to access object **440** within the context. This access would normally succeed. However, execution context **420** also shows a principal **630** attempting to access object **640** of execution context **620,** across a context barrier **600.** Normally, this access would be prohibited as indicated by the X **636** where the action **635** crosses the context barrier **600.**

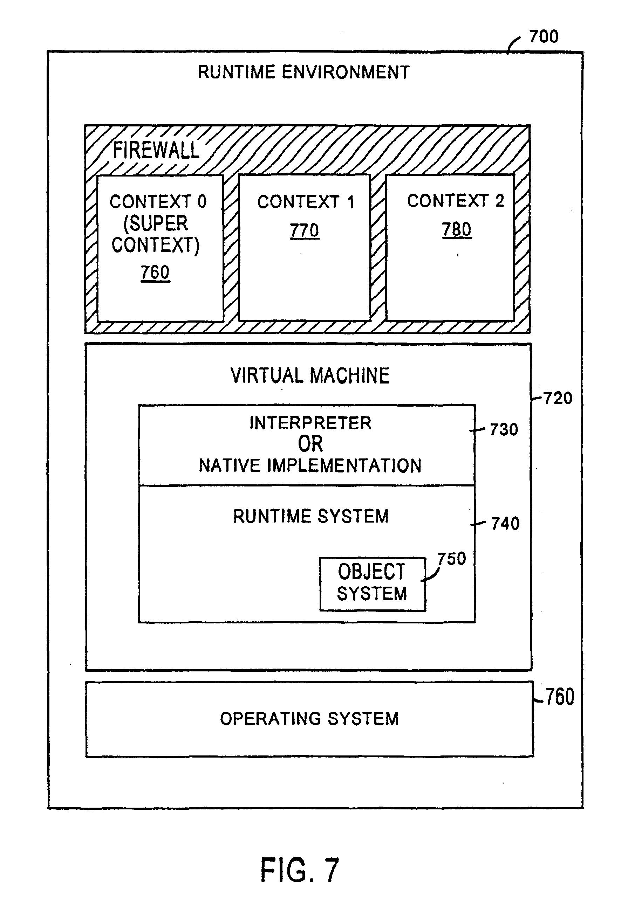

**Figure 7** is a representation of a software architecture useful in carrying out the invention. This software architecture is shown as a run time environment **700.** An operating system 710 for the small footprint device is commonly used. A virtual machine **720,** in an exemplary embodiment of the invention, is implemented over the operating system. The virtual machine could be a Java Card™ virtual machine or other virtual machine. The capabilities of a standard virtual machine can be expanded to provide the additional functionality described herein or the functionality can be provided as separate modules. The virtual machine **720** may include an interpreter or native implementation **730** which provides access to a run time system **740.** The run time system includes object system **750** for managing the objects of an object oriented implementation. Three contexts, **760, 770** and **780,** are shown. Each context is separated from the other by a context barrier (sometimes referred to as a firewall) between the execution contexts. Context **760** is, in one specific embodiment, a supercontext. That is, context **760** has privileges and capabilities not available to subordinate contexts **770** and **780,** potentially including privileges to create entry point objects or global data structures, and to access objects in subordinate contexts **770** and **780**.

Every object is associated with one particular context. That context is said to own each object that is associated with it. The runtime system **740** provides a means for uniquely identifying contexts, and a means for specifying and identifying the currently executing context. The object system **750** provides a mechanism for associating objects with their owning contexts.

For example, the runtime **740** can identify contexts with a unique name, and correspondingly the object system **750** can associate objects with that context by recording the context's name in the object's header. Information in the object's header cannot be accessed by programs written in the object-oriented language, but is only available to the virtual machine **720** itself. Alternately, the runtime system **740** can identify contexts by dividing the memory space into separate regions, each for a particular context, and correspondingly the object system **750** can associate objects with that context by allocating the object's storage in that context's memory space.

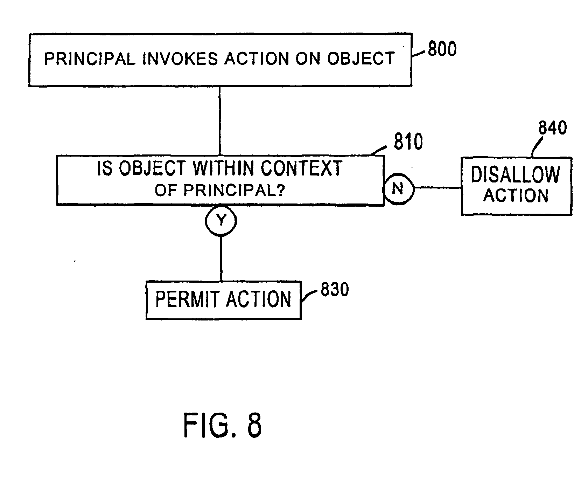

**Figure 8** is a flow chart of a security enforcement process implementing a context barrier in accordance with one aspect of the invention. When a principal invokes an action on an object (**800**) a check is made to determine whether the object is within the context of the principal (**810**). If it is not, the action is disallowed (**840**). Otherwise, the action is permitted (**830**). This is the simplest form of context barrier or firewall. In one specific embodiment the action is disallowed (**840**) by throwing a security exception if the object is outside of the namespace or the memory space of the context requesting access.

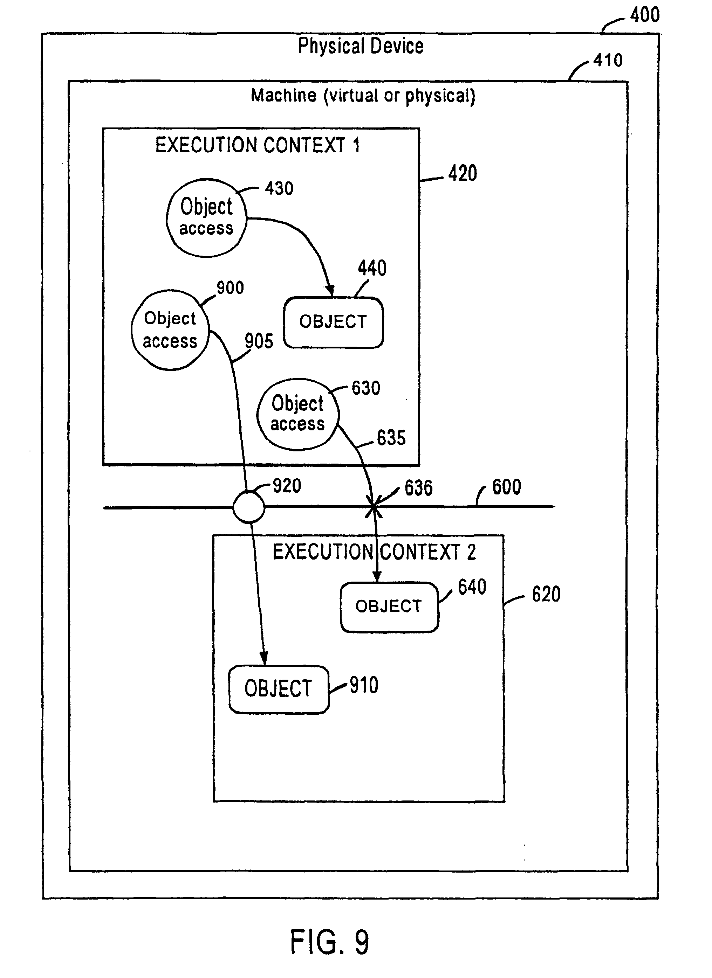

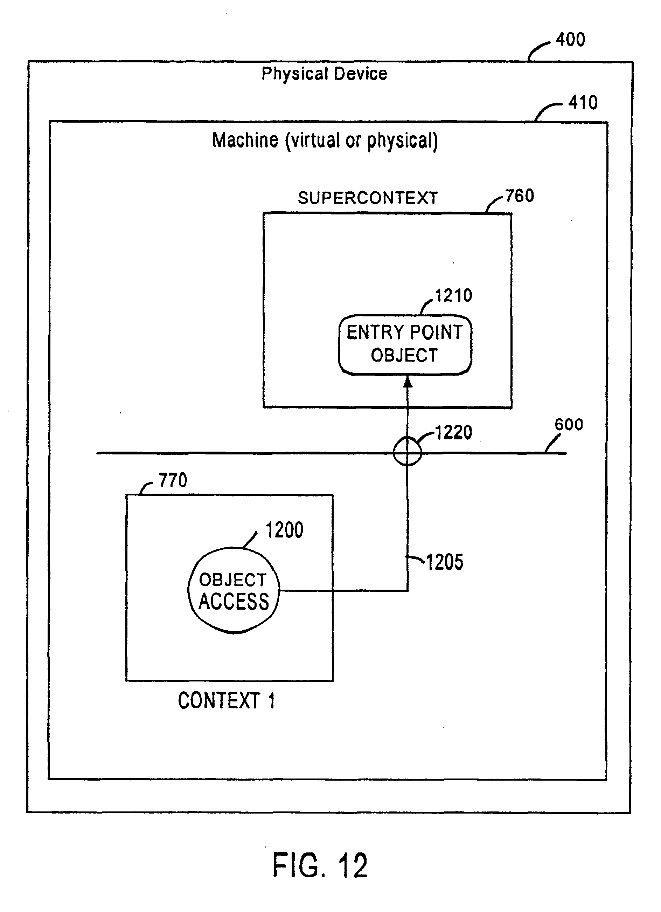

**Figure 9** is a block diagram showing object access across a firewall in accordance with one aspect of the invention. **Figure 9** is substantially similar to **Figure 6**. However, **Figure 9** also shows principal **900** seeking to access object **910** in order to perform action **905** on the object **910.** According to the invention, rather than having the access blocked by the firewall **600,** in the way that action **635** is blocked, action **905** is permitted to occur across the firewall through access point **920** so that principal **900** can perform action **905** on object **910** notwithstanding the fact that the principal and the object are in different execution contexts. The mechanisms behind access point **920** are described below with reference to **Figures 12-18.** Note that access point **920** can coexist with obstructed accesses such as **X 636.** Thus access point **920** provides fine-grain control of sharing (object by object security) across context barrier **600**.

When object access **900** is initiated, the current context setting is context **420.** If the object **910** is a data object, the action **905** is a simple data access, and no code is executed in the second context **620.** If the object **910** is an entity object, and the action **905** results in that object's code being executed, that code is executed in the second context **620.** To execute the code of object **910** in the correct context **620,** the virtual machine **410** performs a context switch. The context switch changes the current context setting to be context **620,** and the previous value of the current context setting is stored so that it can be restored later. From that point on code will execute in the new current context. When the action **905** completes, control is returned to the point following access **900.** During the return, the virtual machine **410** must restore the value of the current context setting to its previous value.

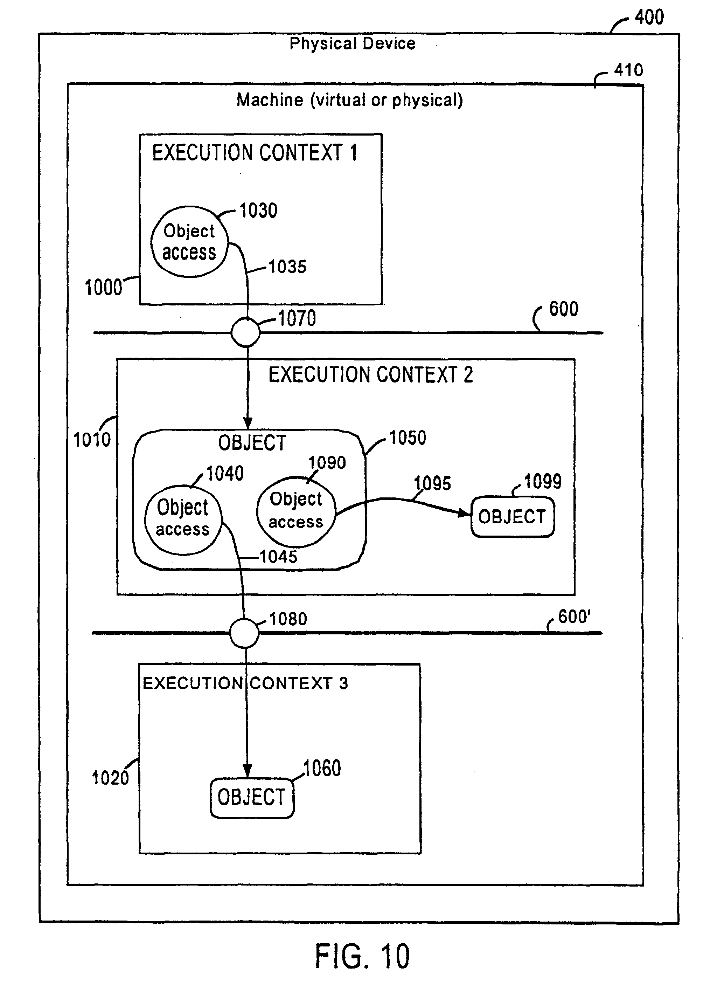

**Figure 10** is a block diagram showing cascaded object accesses across a firewall. **Figure 10** shows three execution contexts, **1000, 1010** and **1020.** Principal **1030** in execution context 1 seeks to invoke an action **1035** on object **1050** in execution context 2 and does so through access point **1070** in context barrier **600.** Object **1050** in execution context 2 has an object access **1040** which seeks to perform an action **1045** on the object **1060** in execution context 3. It achieves this by using access point **1080** in context barrier **600'** separating execution contexts 2 and 3. Object **1050** in execution context 2 also has another object access **1090** which invokes an action **1095** on an object **1099** in the same execution context, that is, in execution context 2. Both actions **1035** and **1045** result in context switches as described in the explanation of **Figure 9**. But as action **1095** does not cross the context barrier, a context switch is not required for its execution, and therefore does not occur.

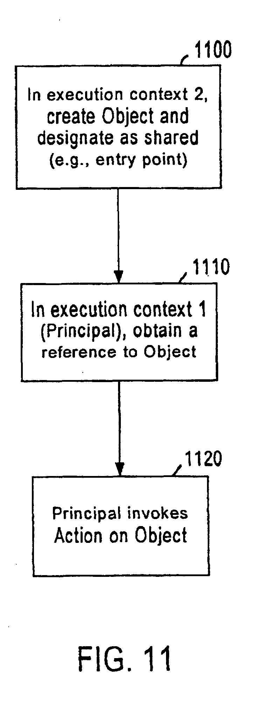

**Figure 11** is a flow chart of a process for permitting access by a principal in one context across a firewall into another context. There are essentially three steps to this process. In execution context 2, an object to be accessed is created and designated as shared (**1100**). In execution context 1, the principal obtains a reference to the object in execution context 2 (**1110**). The principal in execution context 1 then invokes an action upon the object designated as shared in context 2 (**1120**).

With respect to identifying or designating a created object as shareable as discussed in item **1100** of **Figure 11,** this can be done, in accordance with a specific embodiment of the invention, by including a shareable attribute in the header of an object's representation. Information in an object's header cannot be accessed by programs written in the object-oriented language, but is only available to the VM itself.

Obtaining a reference to an object in another context is a special case of accessing an object in another context. A mechanism that provides access to an object in another context can make other objects available also. For instance, invoking a method on an object in another context may return a reference to a second object in a different context. An additional mechanism is required to allow an initial reference to an object in a different context to be obtained. In a specific embodiment, references to certain well-known entry point objects can be obtained using a public API. Once the initial reference to an object in a different context is obtained, further references can be obtained from that object, and so on.

There are four general approaches to obtaining information across a context barrier in accordance with the invention. These approaches can be utilized individually or in combination in order to access an object across a context barrier or to obtain a reference of an object to be accessed across a context barrier (**1110**). These approaches are described in **Figures 12-18.**

**Figure 12** is a block diagram illustrating the use of entry point objects to permit access across a context barrier. As shown in **Figure 12,** some object **1200** in context **770** (context 1) desires access to information in supercontext **760.** In the specific embodiment, a supercontext **760** contains at least one entry point object **1210.** The entry point object **1210** can be published as part of a public API, or can be made available indirectly through a published API (e.g., in accordance with the mechanisms described previously with reference to Figure 11), so that each context subordinate to the supercontext may communicate with the entry point object of the supercontext. (It will be appreciated that in other embodiments, entry point objects may be housed by a context other than the supercontext.)

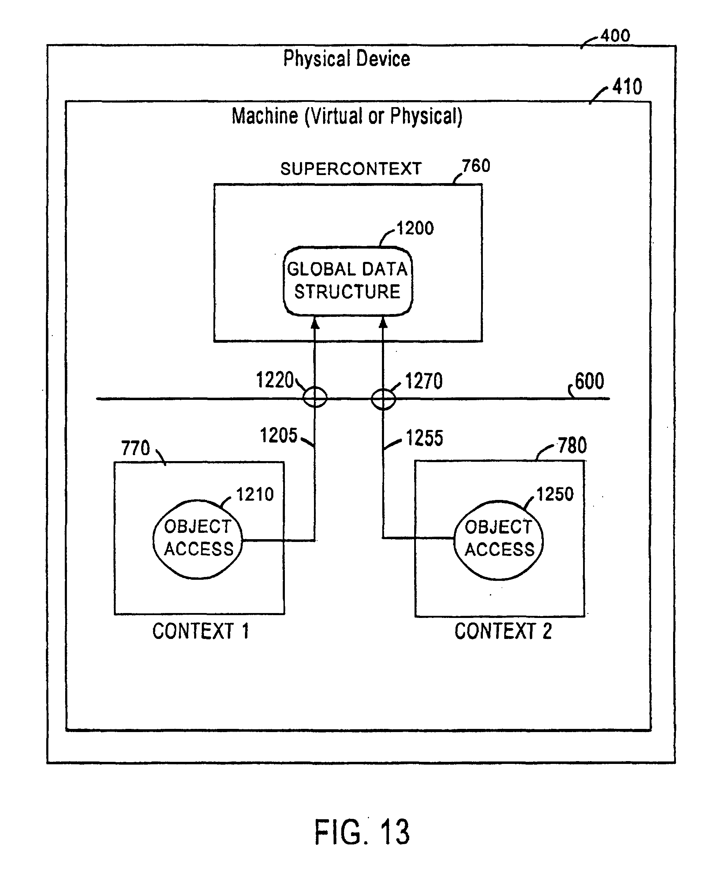

**Figure 13** is a block diagram illustrating the use of global data structures to permit access across a firewall. In this approach, supercontext **760** creates a global data structure such as a global array. In the specific embodiment supercontext **760** is the only context permitted to create such a global data structure. (It will be appreciated that in other embodiments, global data may be housed by a context other than the supercontext.) By virtue of its global status, each of the contexts **770** and **780** may read and write to the global data structure. Thus, information written into the global data structure by one context can be read by another context For example, this mechanism can be used to pass binary data or references to objects between contexts.

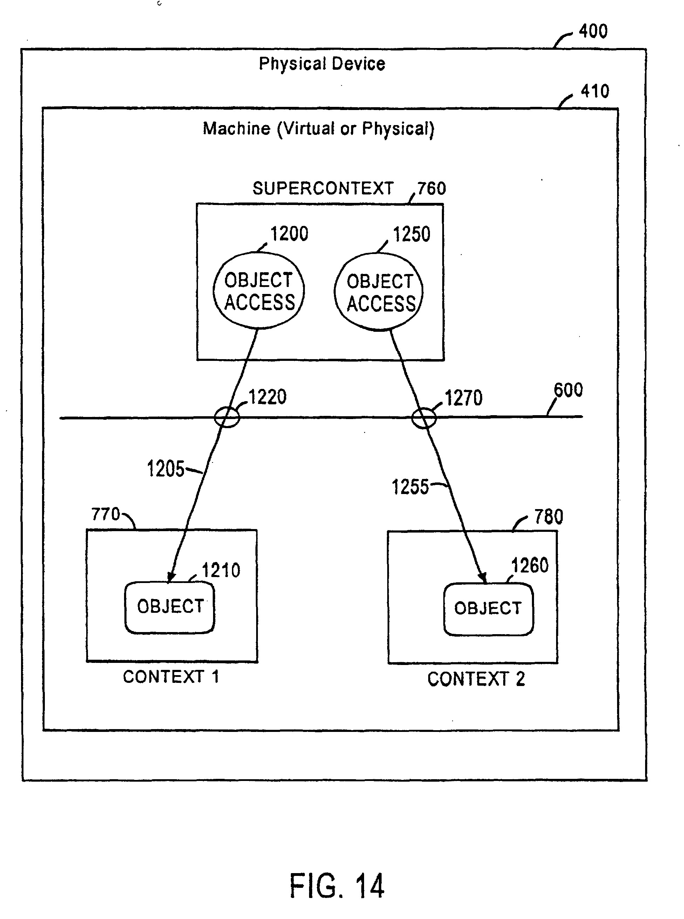

**Figure 14** is a block diagram illustrating the use of supercontext privileges to permit access across a context barrier. In **Figure 14,** an object in supercontext **760** seeks access to context **780** across the context barrier separating the two. Supercontext **760** can invoke any of the methods of context **780** and can access any of the data contained within context **780,** by virtue of the privileges associated with the supercontext

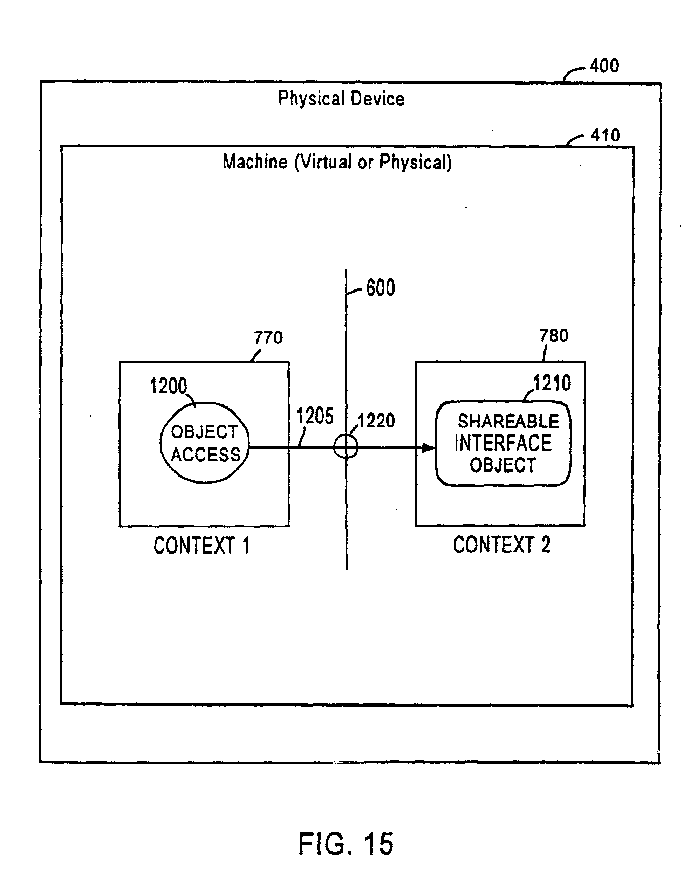

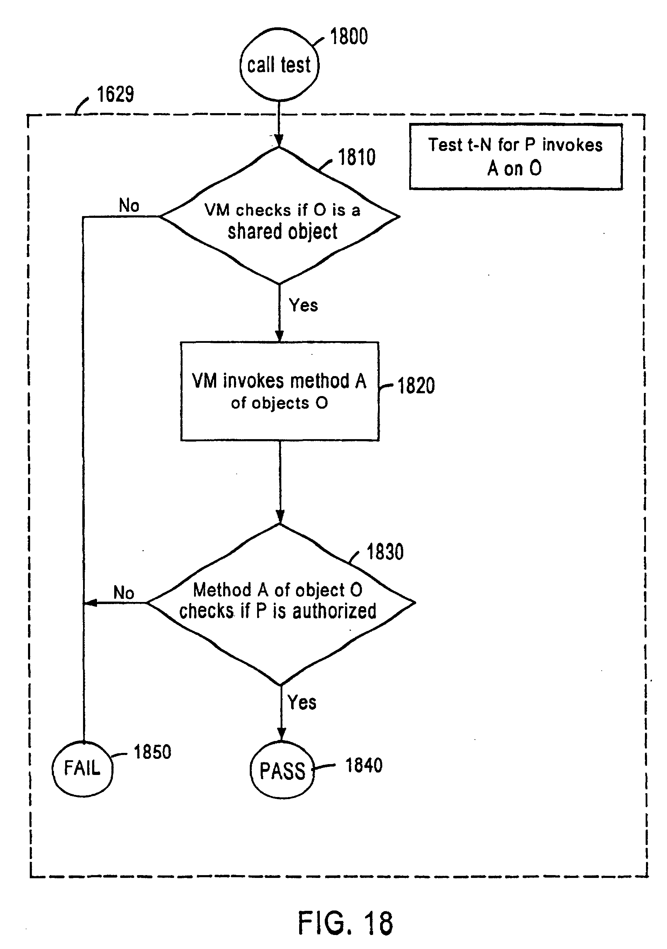

**Figure 15** is a block diagram illustrating the use of shareable interface objects to permit access across a firewall. A shareable interface defines a set of shareable interface methods. A shareable interface object is an object that implements at least the set of methods defined in a shareable interface. In **Figure 15,** object **1210** in context 2 (**780**) is a shareable interface object. An object access **1200** in another context **770** can invoke any of the shareable interface methods on the object **1210** if the principal of the object access **1200** is authorized to do so by the object **1210** itself. This authorization is further discussed with reference to **Figure 18** below.

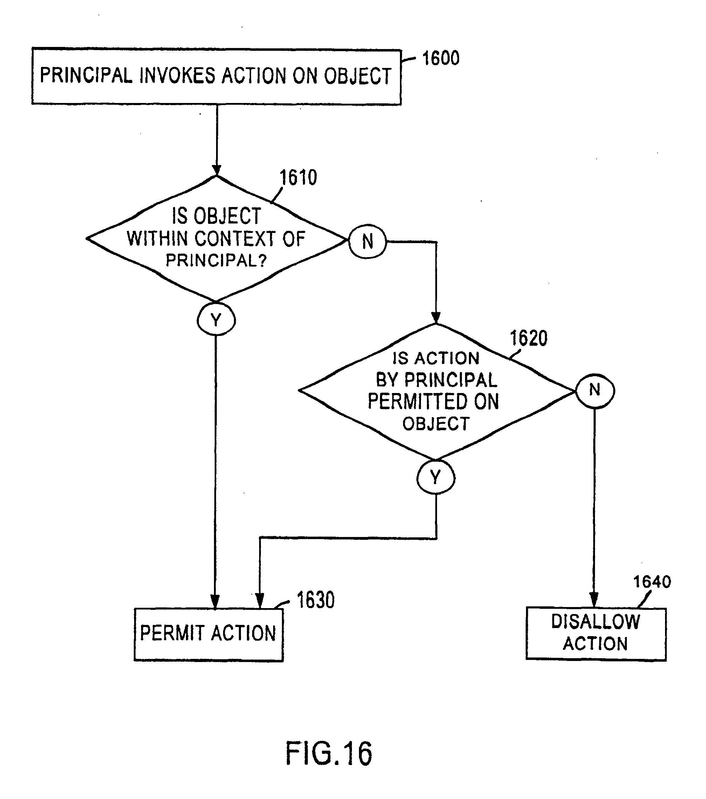

It will be appreciated that a virtual machine consistent with the invention provides functionality beyond that of earlier virtual machines, such as the virtual machine described in the Java™ Virtual Machine Specification. In particular, consistently with the invention, the virtual machine provides functionality to implement or to facilitate a security enforcement process that permits access across a firewall. This process is described next with reference to **Figures 16-18.** Note that it is applicable to any approach for providing access across the firewall, including but not limited to the four approaches described with reference to **Figures 12-15** above.

**Figure 16** is a flow chart of a security enforcement process permitting access across a firewall. When a principal attempts to invoke action on an object **1600,** a check is made to determine if the object is within the context of the principal (**1610**). If it is, (**1610-Y**), the action is permitted (**1630**). If it is not, (**1610-N**), a check is made to see if the action by the principal is permitted on the object (**1620**). If it is, (**1620-Y**), the action is permitted (**1630**). If it is not, (**1620-N**), the action is disallowed. In the specific embodiment a security exception is thrown (**1640**).

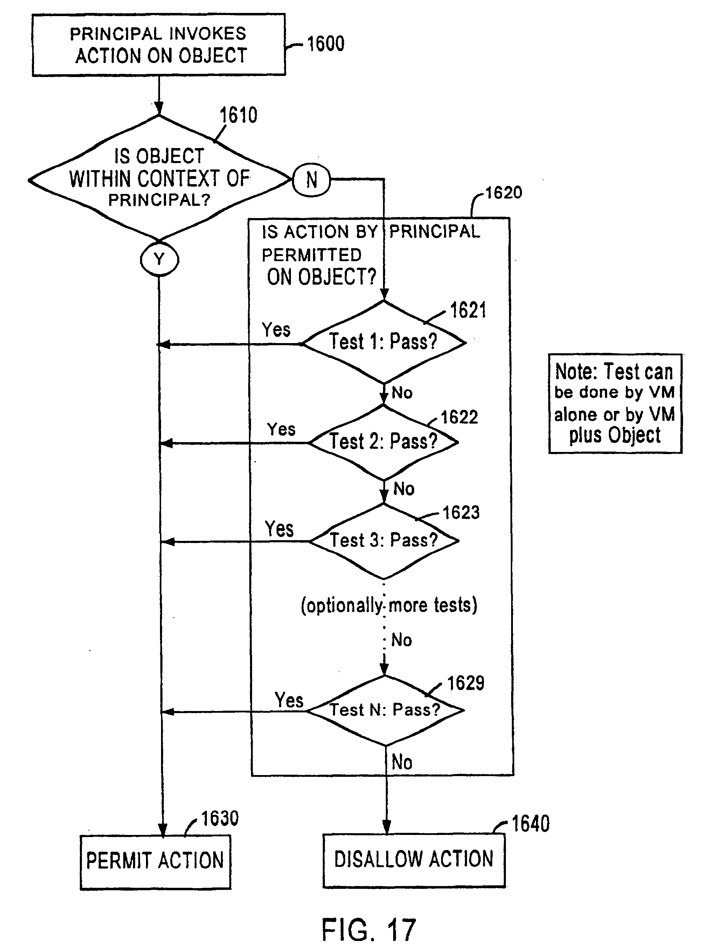

**Figure 17** is the flow chart of **Figure 16** showing further details of block **1620.** If the object is not within the context of the principal (**1610-N**), a plurality of tests, **1621, 1622, 1623... 1629** are undertaken to see if the action by the principal is permitted on the object. These tests can be done by the virtual machine alone or by the virtual machine plus the object, in a virtual machine object oriented implementation. If any of the tests results in a pass, the action is permitted (**1630**). However, if all tests result in a negative determination (**162X-No**), the action will be disallowed. In a specific embodiment, a security exception will be thrown (**1640**). These tests relate to the permitted access discussed in conjunction with **Figures 12-15**.

**Figure 18** is a flow chart showing an exemplary implementation of block **1629** of **Figure 17** for use with access method described in **Figure 15.** In a test, such as **829** or **1629,** a virtual machine checks if the object is a shared object **1810.** If it is not (**1810-No**), the test will fail. However, if it is (**1810-Yes**), the virtual machine will invoke the method A on object O (**1820**). If the method A on object O determines that the principal is authorized (**1830**), the test will be passed (**1840**) and access permitted. Otherwise, the test will fail (**1850**). This allows the authorization text to be programmed into the code of the object itself.

Although the invention has been illustrated with respect to a smart card implementation, the invention applies to other devices with a small footprint, not just to smart cards. Devices with a small footprint are generally considered to be those that are restricted or limited in memory or in computing power or speed. Such small footprint devices may include boundary scan devices, field programmable devices, pagers and cellular phones among many others.

In general, small footprint devices are resource constrained computational devices and systems where secure interoperation of execution contexts is a concern. Such small devices impose constraints on the implementation of security measures because of their limited resources. Because of resource constraints, in a virtual machine implementation, a single virtual or physical machine must be used as opposed to multiple virtual machines.

The invention may also be applied to devices with larger footprints where the characteristics of the invention may prove beneficial. For example, the invention may prove advantageous when using servlets if there is object sharing between them. Even some desktop systems may profitably utilize the techniques of the invention.

While the Java™ language and platform are suitable for the invention, any language or platform having certain characteristics would be well suited for implementing the invention. These characteristics include type safety, pointer safety, object-oriented, dynamically linked, and virtual-machine based. Not all of these characteristics need to be present in a particular implementation. In some embodiments, languages or platforms lacking one or more of these characteristics may be utilized. A "virtual machine" could be implemented either in bits (virtual machine) or in silicon (real/physical machines).

Although the invention has been illustrated showing object by object security, other approaches, such as class by class security could be utilized.

Although the present invention has been described and illustrated in detail, it is clearly understood that the same is by way of illustration and example only and is not to be taken by way of limitation, the spirit and scope of the present invention being limited only by the terms of the appended claims and their equivalents.

### 6. Applet Isolation and Object Sharing

Any implementation of the JCRE shall support isolation of contexts and applets. Isolation means that one applet can not access the fields or objects of an applet in another context unless the other applet explicitly provides an interface for access. The JCRE mechanisms for applet isolation and object sharing are detailed in the sections below.

### 6.1 Applet Firewall

The *applet firewall* within Java Card technology is runtime-enforced protection and is separate from the Java technology protections. The Java language protections still apply to Java Card applets. The Java language ensures that strong typing and protection attributes are enforced.

Applet firewalls are always enforced in the Java Card VM. They allow the VM to automatical perform additional security checks at runtime.

### 6.1.1 Contexts and Context Switching

Firewalls essentially partition the Java Card platform's object system into separate protected object spaces called *contexts*. The firewall is the boundary between one context and another. The JCRE shall allocate and manage an *applet context* for each applet that is installed on the card. (But see paragraph 6.1.1.2 below for a discussion of group contexts.)

In addition, the JCRE maintains its own *JCRE context*. This context is much like an applet context, but it has special system privileges so that it can perform operations that are denied to applet contexts.

At any point in time, there is only one *active context* within the VM. (This is called the *currently active context*.) All bytecodes that access objects are checked at *runtime* against the currently active context in order to determine if the access is allowed. A java.lang.SecurityException is thrown when an access is disallowed.

When certain well-defined conditions are met during the execution of invoke-type bytecodes as described in paragraph 6.2.8, the VM performs a *context switch*. The previous context is pushed on an internal VM stack, a new context becomes the currently active context, and the invoked method executes in this new context. Upon exit from that method the VM performs a restoring context switch. The original context (of the caller of the method) is popped from the stack and is restored as the currently active context. Context switches can be nested. The maximum depth depends on the amount of VM stack space available.

Most method invocations in Java Card technology do not cause a context switch. Context switches only occur during invocation of and return from certain methods, as well as during exception exits from those methods (see 6.2.8).

During a context-switching method invocation, an additional piece of data, indicating the currently active context, is pushed onto the return stack. This context is restored when the method is exited.

Further details of contexts and context switching are provided in later sections of this chapter.

### 6.1.1.1 Group Contexts

Usually, each instance of a Java Card applet defines a separate context. But with Java Card 2.1 technology, the concept of *group context* is introduced. If more than one applet is contained in a single Java package, they share the same context. Additionally, all instances of the same applet class share the same context. In other words, there is no firewall between two applet instances in a group context.

The discussion of contexts and context switching above in section 6.1.1 assumes that each applet instance is associated with a separate context. In Java Card 2.1 technology, contexts are compared to enforce the firewall, and the instance AID is pushed onto the stack. Additionally, this happens not only when the context switches, but also when control switches from an object owned by one applet instance to an object owned by another instance within the same package.

### 6.1.2 Object Ownership

When a new Object is created, it is associated with the currently active context. But the object is *owned* by the applet instance within the currently active context when the object is instantiated. An object is owned by an applet instance, or by the JCRE.

### 6.1.3 Object Access

In general, an object can only be *accessed* by its owning context, that is, when the owning context is the currently active context. The firewall prevents an object from being accessed by another applet in a different context.

In implementation terms, each time an object is accessed, the object's owner context is compared to the currently active context, If these do not match, the access is not performed and a SecurityException is thrown.

An object is accessed when one of the following bytecodes is executed using the object's reference:
getfield, putfield, invokevirtual, invokeinterface,
athrow, <T>aload, <T>astore, arraylength, checkcast, instanceof
<T> refers to the various types of array bytecodes, such as baload, sastore, etc.

This list includes any special or optimized forms of these bytecodes implemented in the Java Card VM, such as getfield_b, sgetfield_s_this, etc.

### 6.1.4 Firewall Protection

The Java Card firewall provides protection against the most frequently anticipated security concern: developer mistakes and design oversights that might allow sensitive data to be "leaked" to another applet. An applet may be able to obtain an object reference from a publicly accessible location, but if the object is owned by a different applet, the firewall ensures security.

The firewall also provides protection against incorrect code. If incorrect code is loaded onto a card, the firewall still protects objects from being accessed by this code.

The Java Card API 2.1 specifies the basic minimum protection requirements of contexts and firewalls because these features shall be supported in ways that are not transparent to the applet developer. Developers shall be aware of the behavior of objects, APIs, and exceptions related to the firewall.

JCRE implementers are free to implement additional security mechanisms beyond those of the applet firewall, as long as these mechanisms are transparent to applets and do not change the externally visible operation of the VM.

### 6.1.5 Static Fields and Methods

It should also be noted that classes are not owned by contexts. There is no runtime context check that can be performed when a class static field is accessed. Neither is there a context switch when a static method is invoked. (Similarly, invokespecial causes no context switch.)

Public static fields and public static methods are accessible from any context: static methods execute in the same context as their caller.

Objects referenced in static fields are just regular objects. They are owned by whomever created them and standard firewall access rules apply. If it is necessary to share them across multiple applet contexts, then these objects need to be *Shareable Interface Objects* (SIOs). (See paragraph 6.2.4 below.)

Of course, the conventional Java technology protections are still enforced for static fields and methods. In addition, when applets are installed, the Installer verifies that each attempt to link to an external static field or method is permitted. Installation and specifics about linkage are beyond the scope of this specification.

### 6.1.5.1 Optional static access checks

The JCRE may perform optional runtime checks that are redundant with the constraints enforced by a verifier. A Java Card VM may detect when code violates fundamental language restrictions, such as invoking a private method in another class, and report or otherwise address the violation.

### 6.2 Object Access Across Contexts

To enable applets to interact with each other and with the JCRE, some well-defined yet secure mechanisms are provided so one context can access an object belonging to another context.

These mechanisms are provided in the Java Card API 2.1 and are discussed in the following sections:
- JCRE Entry Point Objects
- Global Anays
- JCRE Privileges
- Shareable Interfaces

### 6.2.1 JCRE Entry Point Objects

Secure computer systems shall have a way for non-privileged user processes (that are restricted to a subset of resources) to request system services performed by privileged "system" routines.

In the Java Card API 2.1, this is accomplished using *JCRE Entry Point Objects*. These are objects owned by the JCRE context, but they have been flagged as containing entry point methods.

The firewall protects these objects from access by applets. The entry point designation allows the methods of these objects to be invoked from any context. When that occurs, a context switch to the JCRE context is performed. These methods are the gateways through which applets request privileged JCRE system services.

There are two categories of JCRE Entry Point Objects :
■ Temporary JCRE Entry Point Objects
   Like all JCRE Entry Point Objects, methods of temporary JCRE Entry Point Objects can be invoked from any applet context. However, references to these objects cannot be stored in class variables, instance variables or array components. The JCRE detects and restricts attempts to store references to these objects as part of the firewall functionality to prevent unauthorized re-use.
   The APDU object and all JCRE owned exception objects are examples of temporary JCRE Entry Point Objects.
■ Permanent JCRE Entry Point Objects
   Like all JCRE Entry Point Objects, methods of permanent JCRE Entry Point Objects can be invoked from any applet context. Additionally, references to these objects can be stored and freely re-used. JCRE owned AID instances are examples of permanent JCRE Entry Point Objects.

The JCRE is responsible for:
- Determining what privileged services are provided to applets.
- Defining classes containing the entry point methods for those services.
- Creating one or more object instances of those classes.
- Designating those instances as JCRE Entry Point Objects.
- Designating JCRE Entry Point Objects as temporary or permanent.
- Making references to those objects available to applets as needed.

Note - Only the *methods* of these objects are accessible through the firewall. The fields of these objects are still protected by the firewall and can only be accessed by the JCRE context.

Only the JCRE itself can designate Entry Point Objects and whether they are temporary or permanent. JCRE implementers are responsible for implementing the mechanism by which JCRE Entry Point Objects are designated and how they become temporary or permanent.

### 6.2.2 Global Arrays

The global nature of some objects requires that they be accessible from any applet context. The firewall would ordinarily prevent these objects from being used in a flexible manner. The Java Card VM allows an object to be designated as *global*.

All global arrays are temporary global array objects. These objects are owned by the JCRE context, but can be accessed from any applet context. However, references to these objects cannot be stored in class variables, instance variables or array components. The JCRE detects and restricts attempts to store references to these objects as part of the firewall functionality to prevent unauthorized re-use.

For added security, only arrays can be designated as global and only the JCRE itself can designate global arrays. Because applets cannot create them, no API methods are defined. JCRE implementers are responsible for implementing the mechanism by which global arrays are designated.

At the time of publication of this specification, the only global arrays required in the Java Card API 2.1 are the APDU buffer and the byte array input parameter (bArray) to the applet's install method.

Note - Because of its global status, the API specifies that the APDU buffer is cleared to zeroes whenever an applet is selected, before the JCRE accepts a new APDU command. This is to prevent an applet's potentially sensitive data from being "leaked" to another applet via the global APDU buffer. The APDU buffer can be accessed from a shared interface object context and is suitable for passing data across applet contexts. The applet is responsible for protecting secret data that may be accessed from the APDU buffer.

### 6.2.3 JCRE Privileges

Because it is the "system" context, the JCRE context has a special privilege. It can invoke a method of any object on the card. For example, assume that object X is owned by applet A. Normally, only context A can access the fields and methods of X. But the JCRE context is allowed to invoke any of the methods of X. During such an invocation, a context switch occurs from the JCRE context to the applet context that owns X.

Note - The JCRE can access both *methods* and *fields* of X. Method access is the mechanism by which the JCRE enters an applet context. Although the JCRE could invoke any method through the firewall, it shall only invoke the select, process, deselect, and getShareableInterfaceObject (see 6.2.7.1) methods defined in the Applet class.

The JCRE context is the currently active context when the VM begins running after a card reset. The JCRE context is the "root" context and is always either the currently active context or the bottom context saved on the stack.

### 6.2.4 Shareable Interfaces

*Shareable interfeces* are a new feature in the Java Card API 2.1 to enable applet interaction. A shareable interface defines a set of shared interface methods. These interface methods can be invoked from one applet context even if the object implementing them is owned by another applet context.

In this specification, an object instance of a class implementing a shareable interface is called a *Shareable Interface Object (SIO)*.

To the owning context, the SIO is a normal object whose fields and methods can be accessed. To any other context, the SIO is an instance of the shareable interface, and only the methods defined in the shareable interface are accessible. All other fields and methods of the SIO are protected by the firewall.

shareable interfaces provide a secure mechanism for inter-applet communication, as follows:
1. To make an object available to another applet, applet A first defines a shareable interface, SI. A shareable interface extends the interface javacard. framework. Shareable. The methods defined in the shareable interface, SI, represent the services that applet A makes accessible to other applets.
2. Applet A then defines a class C that implements the shareable interface SI. C implements the methods defined in SI. C may also define other methods and fields, but these are protected by the applet firewall. Only the methods defined in SI are accessible to other applets.
3. Applet A creates an object instance O of class C. O belongs to applet A, and the firewall allows A to access any of the fields and methods of O.
4. To access applet A's object O, applet B creates an object reference SIO of type SI.
5. Applet B invokes a special method (JCSystem.getAppletShareableInterfaceObject, described in paragraph 6.17.2) to request a shared interface object reference from applet A.
6. Applet A receives the request and the AID of the requester (B) via Applet. getShareableInterfaceObject, and determines whether or not it will share object O with applet B.
7. If applet A agrees to share with applet B, A responds to the request with a reference to O. This reference is cast to type Shareable so that none of the fields or methods of 0 are visible.
8. Applet B receives the object reference from applet A, casts it to type SI, and stores it in object reference SIO. Even though SIO actually refers to A's object O, SIO is of type SI. Only the shareable interface methods defined in SI are visible to B. The firewall prevents the other fields and methods of O from being accessed by B.
9. Applet B can request service from applet A by invoking one of the shareable interface methods of SIO. During the invocation the Java Card VM performs a context switch. The original currently active context (B) is saved on a stack and the context of the owner (A) of the actual object (O) becomes the new currently active context. A's implementation of the shareable interface method (SI method) executes in A's context.
10. The SI method can find out the AID of its client (B) via the JCSystem.getPreviousContextAID method. This is described in paragraph 6.2.5. The method determines whether or not it will perform the service for applet B.
11. Because of the context switch, the firewall allows the SI method to access all the fields and methods of object O and any other object owned by A. At the same time, the firewall prevents the method from accessing non-shared objects owned by B.
12. The SI method can access the parameters passed by B and can provide a return value to B.
13. During the return, the Java Card VM performs a restoring context switch. The original currently active context (B) is popped from the stack, and again becomes the current context.
14. Because of the context switch, the firewall again allows B to access any of its objects and prevents B from accessing non-shared objects owned by A.

### 6.2.5 Determining the Previous Context

When an applet calls JCSystem.getPreviousContextAID, the JCRE shall return the instance AID of the applet instance active at the time of the last context switch.

### 6.2.5.1 The JCRE Context

The JCRE context does not have an AID. If an applet calls the getPreviousContextAID method when the applet context was entered directly from the JCRE context, this method returns null.

If the applet calls getPreviousContextAID from a method that may be accessed either from within the applet itself or when accessed via a shareable interface from an external applet, it shall check for null return before performing caller AID authentication.

### 6.2.6 Shareable Interface Details

A shareable interface is simply one that extends (either directly or indirectly) the *tagging* interface javacard.framework.shareable. This shareable interface is similar in concept to the Remote interface used by the RMI facility, in which calls to the interface methods take place across a local/remote boundary.

### 6.2.6.1 The Java Card Shareable Interface

Interfaces extending the Shareable tagging interface have this special property: calls to the interface methods take place across Java Card's applet firewall boundary via a context switch.

The Shareable interface serves to identify all shared objects. Any object that needs to be shared through the applet firewall shall directly or indirectly implement this interface. Only those methods specified in a shareable interface are available through the firewall.

Implementation classes can implement any number of shareable interfaces and can extend other shareable implementation classes.

Like any Java platform interface, a shareable interface simply defines a set of service methods. A service provider class declares that it "implements" the shareable interface and provides implementations for each of the service methods of the interface. A service client class accesses the services by obtaining an object reference, casting it to the shareable interface type if necessary, and invoking the service methods of the interface.

The shareable interfaces within the Java Card technology shall have the following properties:
- When a method in a shareable interface is invoked, a context switch occurs to the context of the object's owner.
- When the method exits, the context of the caller is restored.
- Exception handling is enhanced so that the currently active context is correctly restored during the stack frame unwinding that occurs as an exception is thrown.

### 6.2.7 Obtaining Shareable Interface Objects

Inter-applet communication is accomplished when a client applet invokes a shareable interface method of a SIO belonging to a server applet. In order for this to work, there must be a way for the client applet to obtain the SIO from the server applet in the first place. The JCRE provides a mechanism to make this possible. The Applet class and the JCSystem class provide methods to enable a client to request services from the server.

### 6.2.7.1 The Method Applet.getShareableInterfaceObject

This method is implemented by the server applet instance. It shall be called by the JCRE to mediate between a client applet that requests to use an object belonging to another applet, and the server applet that makes its objects available for sharing.

The default behavior shall return null, which indicates that an applet does not participate in inter-applet communication.

A server applet that is intended to be invoked from another applet needs to override this method. This method should examine the clientAID and the parameter. If the clientAID is not one of the expected AIDs, the method should return null. Similarly, if the parameter is not recognized or if it is not allowed for the clientAID, then the method also should return null. Otherwise, the applet should return an SIO of the shareable interface type that the client has requested.

The server applet need not respond with the same SIO to all clients. The server can support multiple types of shared interfaces for different purposes and use clientAID and parameter to determine which kind of SIO to return to the client.

### 6.2.7.2 The Method JCSystem.getAppletShareableInterfaceObject

The JCSystem class contains the method getAppletShareableInterfaceObject, which is invoked by a client applet to communicate with a server applet.

The JCRE shall implement this method to behave as follows:
1. The JCRE searches its internal applet table for one with serverAID. If not found, null is returned.
2. The JCRE invokes this applet's getShareableInterfaceObject method, passing the clientAID of the caller and the parameter.
3. A context switch occurs to the server applet, and its implementation of getShareableInterfaceObject proceeds as described in the previous section. The server applet returns a SIO (or null).
4. getAppletShareableInterfaceObject returns the same SIO (or null) to its caller.

For enhanced security, the implementation shall make it impossible for the client to tell which of the following conditions caused a null value to be returned:
- The serverAID was not found.
- The server applet does not participate in inter-applet communication.
- The server applet does not recognize the clientAID or the parameter.
- The server applet won't communicate with this client.
- The server applet won't communicate with this client as specified by the parameter.

### 6.2.8 Class and Object Access Behavior

A static class field is *accessed* when one of the following Java bytecodes is executed:
getstatic, putstatic

An object is *accessed* when one of the following Java bytecodes is executed using the object's reference:
getfield, putfield, invokevirtual, invokeinterface, athrow,
<T>aload, <T>astore, arraylength, checkcast, instanceof
<T> refers to the various types of array bytecodes, such as baload, sastore, etc.

This list also includes any special or optimized forms of these bytecodes that may be implemented in the Java Card VM, such as getfield_b, sgetfield_s_this, etc.

Prior to performing the work of the bytecode as specified by the Java VM, the Java Card VM will perform an *access check* on the referenced object. If access is denied, then a SecurityException is thrown.

The access checks performed by the Java Card VM depend on the type and owner of the referenced object, the bytecode, and the currently active context. They are described in the following sections.

### 6.2.8.1 Accessing Static Class Fields

### Bytecodes:

getatatic, putstatic
■ If the JCRE is the currently active context, then access is allowed.
■ Otherwise, if the bytecode is putstatic and the field being stored is a reference type and the reference being stored is a reference to a temporary JCRE Entry Point Object or a global array then access is denied.
■ Otherwise, access is allowed.

### 6.2.8.2 Accessing Array Objects

### Bytecodes:

<T>aload, <T>astore, arraylength, checkcast, instanceof
■ If the JCRE is the currency active context, then access is allowed.
■ Otherwise, if the bytecode is aastore and the component being stored is a reference type and the reference being stored is a reference to a temporary JCRE Entry Point Object or a global array then access is denied.
■ Otherwise, if the array is owned by the currently active context, then access is allowed.
■ Otherwise, if the array is designated global, then access is allowed.
■ Otherwise, access is denied.

### 6.2.8.3 Accessing Class Instance Object Fields

### Bytecodes:

getfield, putfield
■ If the JCRE is the currently active context, then access is allowed.
■ Otherwise, if the bytecode is putfield and the field being stored is a reference type and the reference being stored is a reference to a temporary JCRE Entry Point Object or a global array then access is denied.
■ Otherwise if the object is owned by the currently active context, then access is allowed.
■ Otherwise, access is denied.

### 6.2.8.4 Accessing Class Instance Object Methods

### Bytecodes:

invokevirtual
■ If the object is owned by the currently active context, then access is allowed. Context is switched to the object owner's context.
■ Otherwise, if the object is designated a JCRE Entry Point Object, then access is allowed. Context is switched to the object owner's context (shall be JCRE).
■ Otherwise, if JCRE is the currently active context, then access is allowed. Context is switched to the object owner's context.
■ Otherwise, access is denied.

### 6.2.8.5 Accessing Standard Interface Methods

### Bytecodes:

invokeinterface
■ If the object is owned by the currently active context, then access is allowed.
■ Otherwise, if the JCRE is the currently active context, then access is allowed. Context is switched to the object owner's context.
■ Otherwise, access is denied.

### 6.2.8.6 Accessing Shareable Interface Methods

### Bytecodes:

invokeinterface
■ If the object is owned by the currently active context, then access is allowed.
■ Otherwise, if the object's class implements a Shareable interface, and if the interface being invoked extends the shareable interface, then access is allowed. Context is switched to the object owner's context.
■ Otherwise, if the JCRE is the currently active context, then access is allowed. Context is switched to the object owner's context.
■ Otherwise, access is denied.

### 6.2.8.7 Throwing Exception Objects

### Bytecodes:

athrow
■ If the object is owned by the currently active context, then access is allowed.
■ Otherwise, if the object is designated a JCRE Entry Point Object, then access is allowed.
■ Otherwise, if the JCRE is the currently active context, then access is allowed.
■ Otherwise, access is denied.

### 6.2.8.8 Accessing Class Instance Objects

### Bytecodes:

checkcast, instanceof
■ If the object is owned by the currently active context, then access is allowed.
■ Otherwise, if JCRE is the currently active context, then access is allowed.
■ Otherwise, if the object is designated a JCRE Entry Point Object, then access is allowed.
■ Otherwise, if the JCRE is the currently active context, then access is allowed.
■ Otherwise, access is denied.

### 6.2.8.9 Accessing Standard Interfaces

### Bytecodes:

checkcast, instanceof
■ If the object is owned by the currently active context, then access is allowed.
■ Otherwise, if the JCRE is the currently active context, then access is allowed.
■ Otherwise, access is denied.

### 6.2.8.10 Accessing Shareable Interfaces

### Bytecodes:

checkcast, instanceof
■ If the object is owned by the currently active context, then access is allowed.
■ Otherwise, if the object's class implements a shareable interface, and if the object is being cast into (checkcast) or is an instance of (instanceof) an interface that extends the shareable interface, then access is allowed.
■ Otherwise, if the JCRE is the currently active context, then access is allowed.
■ Otherwise, access is denied.

### 6.3 Transient Objects and Applet contexts

Transient objects of CLEAR_ON _RESET type behave like persistent objects in that they can be accessed only when the currently active applet context is the same as the owner of the object (the currently active applet context at the time when the object was created).

Transient objects of CLEAR_ON _DESELECT type can only be created or accessed when the currently active applet context is the currently selected applet context. If any of the makeTransient factory methods is called to create a CLEAR_ON_DESELECT type transient object when the currently active applet context is not the currently selected applet context, the method shall throw a SystemException with reason code of ILLEGAL_TRANSIENT. If an attempt is made to access a transient object of CLEAR_ON_DESELECT type when the currently active applet context is not the currently selected applet context, the JCRE shall throw a SecurityException.

Applets that are part of the same package share the same group context Every applet instance from a package shares all its object instances with all other instances from the same package. (This includes transient objects of both CLEAR_ON_RESET type and CLEAR_ON_DESELECT type owned by these applet instances.)

The transient objects of CLEAR_ON _DESELECT type owned by any applet instance within the same package shall be accessible when any of the applet instances in this package is the currently selected applet.

### Glossary

**AID** is an acronym for Application IDentifier as defined in ISO 7816-5.
**APDU** is an acronym for Application Protocol Data Unit as defined in ISO 7816-4.
**API** is an acronym for Application Programming Interface. The API defines calling conventions by which an application program accesses the operating system and other services.
**Applet** within the context of this document means a Java Card Applet, which is the basic unit of selection, context, functionality, and security in Java Card technology.
**Applet** developer refers to a person creating a Java Card applet using the Java Card technology specifications.
**Applet firewall** is the mechanism in the Java Card technology by which the VM prevents an applet from making unauthorized accesses to objects owned by other applet contexts or the JCRE context, and reports or otherwise addresses the violation.
**CAD** is an acronym for Card Acceptance Device. The CAD is the device in which the card is inserted.
**Cast** is the explicit conversion from one data type to another.
**Class** is the prototype for an object in an object-oriented language. A class may also be considered a set of objects that share a common structure and behavior. The structure of a class is determined by the class variables that represent the state of an object of that class and the behavior is given by a set of methods associated with the class.
Classes are rotated in a class hierarchy. One class may be a specialization (a subclass) of another (its superclass), it may have reference to other classes, and it may use other classes in a client-server relationship.
**Context** (See Applet execution context.)
**Currently active context.** The JCRE keeps track of the currently active Java Card applet context. When a virtual method is invoked on an object, and a context switch is required and permitted, the currently active context is changed to correspond to the applet context that owns the object. When that method returns, the previous context is restored. Invocations of static methods have no effect on the currently active context. The currently active context and sharing status of an object together determine if access to an object is permissible.
**Currently selected applet.** The JCRE keeps track of the currently selected Java Card applet. Upon receiving a SELECT command with this applet's AID, the JCRE makes this applet the currently selected applet. The JCRE sends all APDU commands to the currently selected applet.
**Firewall** (see Applet Firewall).
**Framework** is the set of classes that implement the API. This includes core and extension packages. Responsibilities include dispatching of APDUs, applet selection, managing atomicity, and installing applets.
**Instance variables,** also known as fields, represent a portion of an object's internal state. Each object has its own set of instance variables. Objects of the same class will have the same instance variables, but each object can have different values.
**Instantiation,** in object-oriented programming, means to produce a particular object from its class template. This involves allocation of a data structure with the types specified by the template, and initialization of instance variables with either default values or those provided by the class's constructor function.
**Java Card Runtime Environment (JCRE)** consists of the Java Card Virtual Machine, the framework, and the associated native methods.
**JC21RI** is an acronym for the Java Card 2.1 Reference Implementation.
**JCRE implementer** refers to a person creating a vendor-specific implementation using the Java Card API.
**JCVM** is an acronym for the Java Card Virtual Machine. The JCVM is the foundation of the OP card architecture. The JCVM executes byte code and manages classes and objects. It enforces separation between applications (firewalls) and enables secure data sharing.
**JDK** is an acronym for Java Development Kit. The JDK is a Sun Microsystems, Inc. product that provides the environment required for programming in Java. The JDK is available for a variety of platforms, but most notably Sun Solaris and Microsoft Windows®.
**Method** is the name given to a procedure or routine, associated with one or more classes, in object-oriented languages.
**Namespace** is a set of names in which all names are unique.
**Object-Oriented** is a programming methodology based on the concept of an *object*, which is a data structure encapsulated with a set of routines, called *methods*, which operate on the data.
**Objects,** in object-oriented programming, are unique instances of a data structure defined according to the template provided by its class. Each object has its own values for the variables belonging to its class and can respond to the messages (methods) defined by its class.
**Package** is a namespace within the Java programming language and can have classes and interfaces. A package is the smallest unit within the Java programming language.
**Shareable interface** Defines a set of shared interface methods. These interface methods can be invoked from one applet context when the object implementing them is owned by another applet context.
**Shareable interface object (SIO)** An object that implements the shareable interface.

## Claims

1. A method for operating a small footprint device (400) that includes a processing machine (410), wherein program modules are executed on the processing machine, **characterized by**: executing groups of one or more program modules in separate contexts (420, 620: 760, 770, 780; 1000, 1010, 1020), wherein objects of a program module are associated with a particular context, and providing a context barrier (600; 600') for separating and isolating the contexts and for controlling the object-oriented access of a program module executing in one context to information and/or a program module executing in another context, said controlling further comprising preventing said access if said access is unauthorized and enabling said access if said access is authorized.

2. The method of claim 1 wherein said authorization of said access includes at least one security check.

3. The method of claims 1 or 2 wherein said method further comprises allocating separate respective name spaces for each context.

4. The method of claims 1 or 2 wherein said method further comprises allocating separate respective memory spaces for each context.

5. The method of one of the preceding claims 1 to 4 wherein the processing machine (410) comprises a virtual machine (720) running on a processor (300).

6. A computer program product embodying a program of instructions for operating a small footprint device (400) according to one of the method claims 1 to 5.

7. A small footprint device (400) that includes a processing machine (410), wherein program modules are executed on the processing machine, **characterized by**: means for executing groups of one or more program modules in separate contexts (420, 620; 760, 770, 780; 1000, 1010, 1020), wherein objects of a program module are associated with a particular context, and a context barrier (600; 600') for separating and isolating the contexts and for controlling the object-oriented access of a program module executing in one context to information and/or a program module executing in another context, said context barrier further configured to prevent said access if said access is unauthorized and enable said access if said access is authorized.

8. The small footprint device of claim 7 wherein said authorization of said access includes at least one security check.

9. The small footprint device of claim 7 or 8 wherein said device further comprises means for allocating separate respective name spaces for each context.

10. The small footprint device of claim 7 or 8 wherein said device further comprises means for allocating separate respective memory spaces for each context.

11. The small footprint device of one of the preceding claims 7 to 10 wherein the processing machine (410) comprises a virtual machine (720) running on a processor (300).

12. Use of a network for transmitting code from a server over a communications link, the code comprising instructions for operating a small footprint device (400) according to one of the method claims 1 to 5.

## Patentansprüche

1. Verfahren zum Betreiben einer kleinformatigen Einrichtung (400), welche eine Verarbeitungsmaschine (410) enthält, wobei Programmodule auf der Verarbeitungsmaschine ausgeführt werden können, **gekennzeichnet durch**: Ausführen von Gruppen eines oder mehrerer Programmodule in getrennten Kontexten (420, 620; 760, 770, 780; 1000, 1010, 1020), wobei Objekte eines Programmoduls einem bestimmten Kontext zugeordnet sind bzw. werden und Bereitstellen einer Kontextgrenze (600; 600'), um die Kontexte abzutrennen und zu isolieren, und um den objektorientierten Zugriff eines Programmoduls zu kontrollieren, der in einem Kontext abläuft, und zwar gegenüber der Information und/oder einem Programmodul, welches in einem anderen Kontext abläuft, wobei das Kontrollieren bzw. Steuern weiterhin aufweist, daß der Zugriff verhindert wird, wenn der Zugriff nicht autorisiert ist, und der Zugriff ermöglicht wird, wenn der Zugriff autorisiert ist.

2. Verfahren nach Anspruch 1, wobei die Autorisierung des Zugriffs zumindest eine Sicherheitsüberprüfung umfaßt.

3. Verfahren nach Anspruch 1 oder 2, wobei das Verfahren weiterhin das Zuordnen entsprechender getrennter Namensräume bzw. -spaces für jeden Kontext aufweist.

4. Verfahren nach den Ansprüchen 1 oder 2, wobei das Verfahren weiterhin das Zuordnen entsprechender getrennter Speicherräume für jeden Kontext aufweist.

5. Verfahren nach einem der vorstehenden Ansprüche 1 bis 4, wobei die Verarbeitungsmaschine (410) eine virtuelle Maschine (720) aufweist, die auf einem Prozessor (300) abläuft.

6. Computerprogrammprodukt, welches ein Programm aus Anweisungen verkörpert, um eine kleinformatige Einrichtung (400) nach einem der Verfahrensansprüche 1 bis 5 zu betreiben.

7. Kleinformatige Einrichtung bzw. kleinformatiges Gerät (400), welches eine Verarbeitungsmaschine (410) umfaßt, wobei Programmodule auf der Verarbeitungsmaschine ausgeführt werden, **gekennzeichnet durch** Einrichtungen zum Ausführen von Gruppen eines oder mehrerer Programmodule in getrennten Kontexten (420, 620; 760, 770, 780; 1000, 1010, 1020), wobei Objekte eines Programmoduls einem bestimmten Kontext zugeordnet sind, und mit einer Kontextbarriere (600; 600') um die Kontexte abzutrennen und zu isolieren, und zum Kontrollieren des objektorientierten Zugriffs **durch** ein Programmodul, welches in einem Kontext abläuft, auf Information in einem anderen Kontext und/oder auf ein in einem anderen Kontext ablaufendes Programmodul, wobei die Kontextbarriere weiterhin dafür ausgelegt ist, den Zugriff zu verhindern, wenn der Zugriff nicht autorisiert ist, und den Zugriff freizugeben, wenn der Zugriff autorisiert ist.

8. Kleinformatiges Gerät nach Anspruch 7, wobei die Autorisierung des Zugriffs zumindest eine Sicherheitsprüfung umfaßt.

9. Kleinformatiges Gerät nach Anspruch 7 oder 8, wobei das Gerät weiterhin Einrichtungen zum Zuordnen jeweils getrennter Namensräume für jeden Kontext aufweist.

10. Kleinformatiges Gerät nach Anspruch 7 oder 8, wobei das Gerät weiterhin Einrichtungen zum Zuordnen jeweils getrennter Speicherräume für jeden Kontext aufweist.

11. Kleinformatiges Gerät nach einem der vorstehenden Ansprüche 7 bis 10, wobei die Verarbeitungsmaschine (410) eine virtuelle Maschine (720) aufweist, die auf einem Prozessor (300) läuft.

12. Verwendung eines Netzwerkes zum Übermitteln von Code von einem Server über eine Kommunikationsverbindung, wobei der Code Anweisungen zum Betreiben eines kleinformatigen Gerätes (400) gemäß einem der Verfahrensansprüche 1 bis 5 aufweist.

## Revendications

1. Procédé pour faire fonctionner un dispositif à faible empreinte mémoire (400) qui comprend une machine de traitement (410) dans lequel des modules de programme sont exécutés sur la machine de traitement, **caractérisé en ce que**: on exécute des groupes d'un ou plusieurs modules de programme dans des contextes séparés (420, 620; 760, 770, 780; 1000, 1010, 1020), des objets d'un module de programme étant associés à un contexte particulier, et on introduit une barrière de contexte (600; 600') pour séparer et isoler les contextes et pour commander l'accès orienté objet d'un module de programme s'exécutant dans un contexte, à de l'information et/ou un module de programme s'exécutant dans un autre contexte, cette commande comprenant en outre l'opération consistant à empêcher ledit accès si l'accès n'est pas autorisé et à permettre ledit accès si l'accès est autorisé.

2. Procédé selon la revendication 1, dans lequel l'autorisation de l'accès comprend au moins un contrôle de sécurité.

3. Procédé selon les revendications 1 ou 2, dans lequel le procédé comprend en outre l'allocation d'espaces de noms respectifs pour chaque contexte.

4. Procédé selon les revendications 1 ou 2, dans lequel le procédé comprend en outre l'allocation d'espaces de mémoire respectifs séparés pour chaque contexte.

5. Procédé selon l'une des revendications 1 à 4 précédentes, dans lequel la machine de traitement (410) comprend une machine virtuelle (720) fonctionnant sur un processeur (300).

6. Programme-produit d'ordinateur matérialisant un programme d'instructions pour faire fonctionner un dispositif à faible empreinte mémoire (400) selon l'une des revendications de procédé 1 à 5.

7. Dispositif à faible empreinte mémoire (400) qui comprend une machine de traitement (410), dans lequel des modules de programme sont exécutés sur la machine de traitement, **caractérisé par** : un moyen pour exécuter des groupes d'un ou plusieurs modules de programme dans des contextes séparés (420, 620; 760, 770, 780; 1000, 1010, 1020), des objets d'un module de programme étant associés à un contexte particulier, et une barrière de contexte (600; 600') pour séparer et isoler les contextes et pour commander l'accès orienté objet d'un module de programme s'exécutant dans un contexte, à de l'information et/ou un module de programme s'exécutant dans un autre contexte, cette barrière de contexte étant en outre configurée pour empêcher ledit accès si l'accès n'est pas autorisé et permettre ledit accès si l'accès est autorisé.

8. Dispositif à faible empreinte mémoire selon la revendication 7, dans lequel l'autorisation de l'accès comprend au moins un contrôle de sécurité.

9. Dispositif à faible empreinte mémoire selon la revendication 7, ou 8, dans lequel le dispositif comprend en outre un moyen pour allouer des espaces de noms respectifs séparés pour chaque contexte.

10. Dispositif à faible empreinte mémoire selon la revendication 7 ou 8, dans lequel le dispositif comprend en outre un moyen pour allouer des espaces de mémoire respectifs séparés pour chaque contexte.

11. Dispositif à faible empreinte mémoire selon l'une des revendications 7 à 10 précédentes, dans lequel la machine de traitement (410) comprend une machine virtuelle (720) fonctionnant sur un processeur (300).

12. Utilisation d'un réseau pour transmettre un code à partir d'un serveur sur une liaison de communication, le code comprenant des instructions pour faire fonctionner un dispositif à faible empreinte mémoire (400) selon l'une des revendications de procédé 1 à 5.
